# EUROPEAN PATENT APPLICATION

(11) **EP 3 547 749 A1**
(43) Date of publication of application: **02.10.2019**
(21) Application number: 17886663.8
(22) Date of filing: 15.12.2017
(51) Int. Cl.: H04W 28/18, H04W 72/12

(54) **METHOD FOR UNLICENSED TRANSMISSION, TERMINAL AND NETWORK DEVICE**

(30) Priority: 26.12.2016 CN 201611219944
(71) Applicant: Huawei Technologies Co., Ltd., Longgang District Shenzhen, Guangdong 518129 (CN)
(72) Inventor: ZHANG, Lei, Shenzhen Guangdong 518129 (CN); XU, Xiuqiang, Shenzhen Guangdong 518129 (CN); CHEN, Yan, Shenzhen Guangdong 518129 (CN); WU, Yiqun, Shenzhen Guangdong 518129 (CN); DU, Yinggang, Shenzhen Guangdong 518129 (CN)
(74) Representative: Pfenning, Meinig & Partner mbB
(86) International application number: PCT/CN2017/116591
(87) International publication number: WO 2018/121293

(57) **Abstract**

This application discloses a grant-free transmission method, a terminal, and a network device. The method includes: after determining a grant-free transmission pilot and a sending attribute parameter, mapping, by a terminal, a pilot sequence to a corresponding location on a grant-free transmission resource block unit based on a relationship between a time-frequency resource location of a pilot and the sending attribute parameter, and mapping data to another location on the grant-free transmission resource block unit. In this way, flexibility of grant-free transmission performed by the terminal is greatly increased, and an adaptive adjustment is made based on a channel state and a service requirement, thereby improving grant-free transmission efficiency.

## Description

### TECHNICAL FIELD

This application relates to the communications field, and in particular, to a grant-free transmission method, a terminal, and a network device in the communications field.

### BACKGROUND

In a wireless cellular network, such as a Long Term Evolution (Long Term Evolution, LTE) system, before sending uplink data, a terminal needs to first set up a radio resource control (Radio Resource Control, RRC) connection to a network device to enter a radio resource control connected mode, and then sends a scheduling request (Scheduling Request, SR) to the network device. If the network device allows the terminal to send the uplink data, the network device sends a grant instruction to the terminal, and the terminal can send the uplink data to the network device according to an instruction requirement only after receiving the grant instruction. This uplink data sending method is referred to as grant-based transmission. The grant-based transmission has two disadvantages. One disadvantage is that a latency is relatively large. The latency herein is a period of time between a moment at which a terminal determines that there is to-be-sent uplink data and a moment at which the terminal sends the data through an air interface. The other disadvantage is that when a large quantity of terminals need to send uplink data in a specific period of time, excessive uplink and downlink control channel resources are consumed to send scheduling requests and grants, and consequently, a ratio of control overheads to total network overheads (for example, power and air interface resources) is relatively high. This disadvantage of the grant-based transmission is particularly evident when services of the terminals are all small data packet services.

Massive machine-type communication (Massive Machine-Type Communication, mMTC) is an important scenario in three application scenarios in the 5th generation (5th Generation, 5G) mobile communications technology. Typical features in the scenario include a big connection (to be specific, a substantial quantity of terminals), service types being mainly small data packet services, and a specific requirement for a low latency. In a current cellular system, a service scenario with a big connection, especially uplink small packet services, cannot be efficiently supported due to a control mechanism of the cellular system. Therefore, in this scenario, a grant-free (Grant-free) transmission is considered as a more suitable uplink data transmission method than the grant-based transmission. A basic idea of the grant-free transmission is that data "goes soon after coming". To be specific, when determining that there is to-be-sent uplink data, a terminal directly sends the data to a network device after the data is processed in a specific manner, without a need of sending an uplink scheduling request and waiting to receive a grant from the network device. An access latency and signaling overloads can be significantly reduced in grant-free access.

Ultra-reliable and low latency communications (Ultra-Reliable and Low Latency Communications, URLLC) is also an important scenario in the three 5G application scenarios. For some services such as the Internet of Vehicles, self-driving, and industrial control, a system capacity is not a major problem, but there is a high requirement on a latency and reliability. In such a scenario, grant-free transmission is also applicable. Compared with the grant-based transmission solution that requires scheduling by a network device, the grant-free transmission does not require a process of sending an uplink scheduling request and waiting to receive a grant from the network device. Therefore, a transmission latency is significantly shortened, and a latency requirement in the URLLC scenario is met.

Generally, in the grant-free transmission, a terminal transmits data by using a preset time-frequency resource and a pilot according to a fixed coding and modulation scheme (Coding and modulation Scheme, MCS for short). In this way, allocation overheads can be saved, but the terminal cannot adjust a transmission mode based on a channel change or a QoS (English full name: Quality of Service; Chinese full name: quality of service) requirement, thereby lacking flexibility. When the terminal needs to adjust the transmission mode based on the channel change, an extra control message needs to be sent to a network device. Consequently, signaling overheads are increased, and a precious uplink air interface resource is consumed.

### SUMMARY

In view of this, embodiments of this application provide a grant-free transmission method, a terminal, and a network device, so that the terminal can adjust and inform a transmission parameter used by the network device without sending extra control information, thereby saving an uplink air interface resource for grant-free transmission.

According to a first aspect, a grant-free transmission method is provided, where the method includes: obtaining, by a terminal, a pilot sequence and a grant-free transmission resource block unit, selecting a sending attribute parameter group from N sending attribute parameter groups, mapping the pilot sequence to a corresponding location on the resource block unit based on a relationship between the selected sending attribute parameter group and a time-frequency location of a pilot, and mapping to-be-transmitted data to another location on the resource block unit, where N is a positive integer greater than 1. According to this method, the terminal can flexibly make an adaptive adjustment based on a channel or QoS without sending extra signaling, thereby effectively saving a precious uplink air interface resource, and improving communication efficiency.

Optionally, in an implementation of the first aspect, the sending attribute parameter includes at least one of the following parameters: a coding and modulation scheme MCS, power, a codebook, a redundancy version, initial transmission/retransmission, a hybrid automatic repeat request HARQ process number, bandwidth, a resource block unit size, a resource block unit location, a quantity of resource block units bundled for transmission, a frequency hopping pattern, a frequency hopping sequence, a spreading sequence, a scrambling sequence, an interleaved pattern, a resource mapping pattern, a signature sequence, a transmit beam, and a receive beam.

Optionally, in an implementation of the first aspect, the mapping the pilot sequence to a corresponding location on the grant-free transmission resource block unit based on a relationship between the sending attribute parameter and a time-frequency location of a pilot specifically includes: the corresponding location and a data location of another terminal are orthogonal, overlapping, or partially overlapping.

Optionally, in an implementation of the first aspect, the mapping to-be-transmitted data to another location on the grant-free transmission resource block unit specifically includes: the another location on the resource block unit and a pilot location of another terminal are orthogonal, overlapping, or partially overlapping.

Optionally, in an implementation of the first aspect, the pilot sequence is a designated sequence or is randomly selected from a pilot sequence set.

Optionally, in an implementation of the first aspect, the grant-free transmission resource block unit is designated or randomly selected in a grant-free transmission resource region.

Optionally, in an implementation of the first aspect, at least one of the N sending parameter groups includes a parameter different from that in another sending parameter group.

According to a second aspect, a grant-free transmission method is provided, where the method includes: receiving, by a network device, a pilot and data that are sent by a terminal on a grant-free transmission resource block unit, performing detection at a time-frequency location at which the pilot may be located, obtaining a sending attribute parameter based on a location of the pilot and a relationship between a sending attribute parameter group and the time-frequency location of the pilot after detecting the pilot, and detecting the data based on the pilot and the sending attribute parameter.

Optionally, in an implementation of the second aspect, the sending attribute parameter includes at least one of the following parameters: a coding and modulation scheme MCS, power, a codebook, a redundancy version, initial transmission/retransmission, a hybrid automatic repeat request HARQ process number, bandwidth, a resource block unit size, a resource block unit location, a quantity of resource block units bundled for transmission, a frequency hopping pattern, a frequency hopping sequence, a spreading sequence, a scrambling sequence, an interleaved pattern, a resource mapping pattern, a signature sequence, a transmit beam, and a receive beam.

Optionally, in an implementation of the first aspect, at least one of the N sending parameter groups includes a parameter different from that in another sending parameter group.

According to a third aspect, a terminal is provided. The terminal device may be configured to perform the processes performed by the terminal device in the grant-free transmission method in the first aspect and the implementations. The terminal device includes: a processing unit, configured to: select a pilot sequence, a proper sending attribute parameter group from N sending attribute parameter groups, and a grant-free transmission resource block unit, map the pilot sequence to a corresponding location on the resource block unit based on a relationship between the sending attribute parameter group and a time-frequency location of a pilot, and map to-be-transmitted data to another location on the resource block unit, where N is a positive integer greater than 1; and a sending unit, configured to send the pilot and the data to a network device based on a sending attribute parameter in the selected sending attribute parameter group.

According to a fourth aspect, a network device is provided. The network device may be configured to perform the processes performed by the network device in the grant-free transmission method in the second aspect and the implementations. The network device includes: a receiving unit, configured to receive grant-free transmission data and a pilot that are sent by a terminal on a grant-free transmission resource; and a processing unit, configured to: perform blind detection on N time-frequency resource locations at which the pilot may be located, where N is a positive integer greater than 1, and if the pilot is detected, determine a sending attribute parameter of the terminal based on a time-frequency resource location of the pilot.

According to a fifth aspect, a terminal device is provided. The terminal device may be configured to perform the processes performed by the terminal device in the grant-free transmission method in the first aspect and the implementations. The terminal device includes: a processor, configured to: select a pilot sequence, a proper sending attribute parameter group from N sending attribute parameter groups, and a grant-free transmission resource block unit, map the pilot sequence to a corresponding location on the resource block unit based on a relationship between the sending attribute parameter group and a time-frequency location of a pilot, and map to-be-transmitted data to another location on the resource block unit, where N is a positive integer greater than 1; a transmitter, configured to send the pilot and the data to a network device based on a sending attribute parameter in the selected sending attribute parameter group; and a memory, configured to store code to be executed by the processor.

According to a sixth aspect, a network device is provided. The network device may be configured to perform the processes performed by the network device in the grant-free transmission method in the second aspect and the implementations. The network device includes: a receiver, configured to receive grant-free transmission data and a pilot that are sent by a terminal on a grant-free transmission resource; a processor, configured to: perform blind detection on N time-frequency resource locations at which the pilot may be located, where N is a positive integer greater than 1, and if the pilot is detected, determine a sending attribute parameter of the terminal based on a time-frequency resource location of the pilot; and a memory, configured to store code to be executed by the processor.

According to a seventh aspect, a computer readable storage medium is provided. The computer readable storage medium stores a program, and the program enables a terminal device to perform the grant-free transmission method in any one of the first aspect and the implementations of the first aspect.

According to an eighth aspect, a computer readable storage medium is provided. The computer readable storage medium stores a program, and the program enables a network device to perform the grant-free transmission method in any one of the second aspect and the implementations of the second aspect.

### BRIEF DESCRIPTION OF DRAWINGS

To describe the technical solutions in the embodiments of this application more clearly, the following briefly describes the accompanying drawings required for describing the embodiments in this application. Apparently, the accompanying drawings in the following description show merely some embodiments of this application, and a person of ordinary skill in the art may derive other drawings from these accompanying drawings without creative efforts.
FIG. 1 is a schematic architectural diagram of a communications system according to an embodiment of this application;
FIG. 2 is a flowchart of conventional grant-free transmission;
FIG. 3 is a flowchart of grant-free transmission according to an embodiment of this application;
FIG. 4 shows an embodiment in which a time-frequency resource location generated in a frequency division manner is used to indicate a sending attribute according to this application;
FIG. 5 shows an embodiment in which a time-frequency resource location generated in a time division manner is used to indicate a sending attribute according to this application;
FIG. 6 shows an embodiment in which different time-frequency resource locations generated by combining time division and frequency division are used to indicate sending attributes according to this application;
FIG. 7 shows another embodiment in which different time-frequency resource locations generated by combining time division and frequency division are used to indicate sending attributes according to this application;
FIG. 8 is a schematic structural diagram of a terminal according to an embodiment of this application;
FIG. 9 is a schematic structural diagram of a terminal according to an embodiment of this application;
FIG. 10 is a schematic structural diagram of a system chip of a terminal according to an embodiment of this application;
FIG. 11 is a schematic structural diagram of a network device according to an embodiment of this application;
FIG. 12 is a schematic structural diagram of a network device according to an embodiment of this application; and
FIG. 13 is a schematic structural diagram of a system chip of a network device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

It should be understood that the technical solutions in the embodiments of this application may be applied to various communications systems such as a Global System for Mobile Communications (Global System for Mobile Communications, "GSM" for short), a Code Division Multiple Access (Code Division Multiple Access, "CDMA" for short) system, a Wideband Code Division Multiple Access (Wideband Code Division Multiple Access, "WCDMA" for short) system, a Long Term Evolution (Long Term Evolution, "LTE" for short) system, an LTE frequency division duplex (Frequency Division Duplex, "FDD" for short) system, an LTE time division duplex (Time Division Duplex, "TDD" for short), a Universal Mobile Telecommunications System (Universal Mobile Telecommunications System, "UMTS" for short), and a future 5G communications system.

The embodiments are described with reference to a terminal in this application. The terminal may also be referred to as user equipment (User Equipment, "UE" for short), an access terminal, a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless phone, a Session Initiation Protocol (Session Initiation Protocol, "SIP" for short) phone, a wireless local loop (Wireless Local Loop, "WLL" for short) station, a personal digital assistant (Personal Digital Assistant, "PDA" for short), a handled device or a computing device with a wireless communication function, another processing device connected to a wireless modem, an in-vehicle device, a wearable device, a terminal in a future 5G network, a terminal in a future evolved PLMN network, or the like.

The embodiments are described with reference to a network device in this application. The network device may be a device configured to communicate with a terminal. For example, the network device may be a base transceiver station (Base Transceiver Station, "BTS" for short) in a GSM or CDMA system, may be a NodeB (NodeB, "NB" for short) in a WCDMA system, may be an evolved NodeB (Evolved NodeB, "eNB" or "eNodeB" for short) in an LTE system, or may be a terminal functioning as a network device in D2D (Device to Device, device-to-device) communication. Alternatively, the network device may be a relay station, an access point, an in-vehicle device, a transmission point, a wearable device, a network side device in a future 5G network, a network device in a future evolved PLMN network, any device with a network function, or the like.

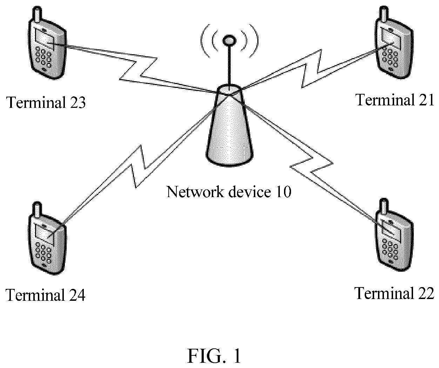

FIG. 1 is a schematic architectural diagram of a communications system according to an embodiment of this application. As shown in FIG. 1, the communications system may include a network device 10, a terminal 21, a terminal 22, a terminal 23, and a terminal 24 that are wirelessly connected. The terminal 21, the terminal 22, the terminal 23, and the terminal 24 access an entire wireless communications system through the network device 10.

A network in the embodiments of this application may be a public land mobile network (Public Land Mobile Network, "PLMN" for short), a device-to-device (Device-to-Device, "D2D" for short) network, a machine-to-machine/man (Machine-to-Machine/Man, "M2M" for short) network, or another network. FIG. 1 is merely a simplified schematic diagram for example. The network may further include another network device and another terminal that are not shown in FIG. 1.

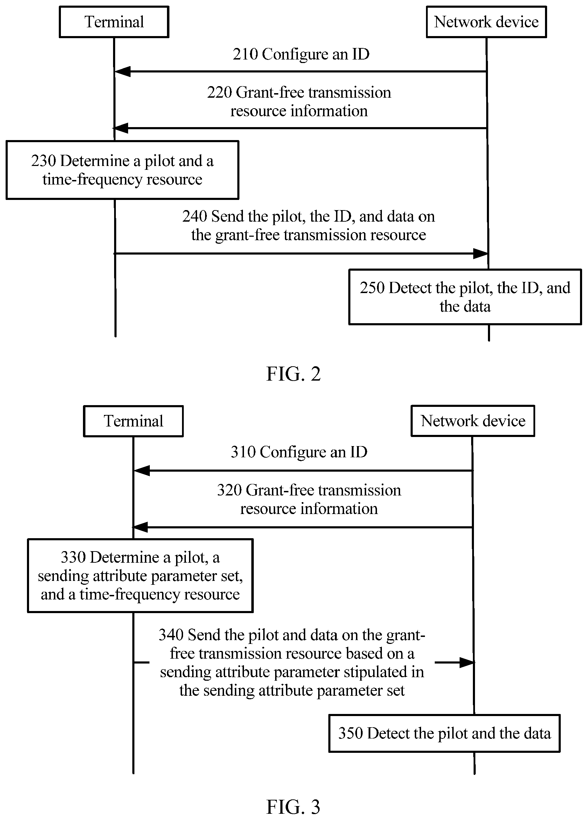

In the embodiments of this application, data may include service data or signaling data, and may further include a terminal ID (English full name: identity; Chinese full name: identity). FIG. 2 is a flowchart of existing conventional grant-free transmission, and the grant-free transmission specifically includes the following steps.

Step 210: A network device configures an ID for a terminal. The ID may be similar to a C-RNTI (English full name: Cell Radio Network Temporary Identifier; Chinese full name: cell radio network temporary identifier) in an LTE system, or may be another mark, such as a group number in multicast or broadcast communication, used to distinguish between different terminals in a service scope of the network device. This process usually occurs when the terminal accesses the network device, or may occur when capability negotiation is performed between the terminal and the network device to determine that grant-free transmission needs to be performed.

Step 220: The network device notifies, in a unicast or broadcast manner, the terminal of transmission resource information used for grant-free transmission.

Step 230: Before initiating grant-free transmission, the terminal selects a pilot and a time-frequency resource, in other words, selects an RBU, from a transmission resource corresponding to the received transmission resource information used for grant-free transmission. A pilot sequence is placed at a pilot location on the RBU, and data (including the ID of the terminal) is placed at another location. Once the RBU is determined, the pilot location is determined.

Step 240: After coding and modulation are performed on to-be-transmitted data and the ID of the terminal based on a preset grant-free transmission MCS, content that includes but is not limited to the pilot, the ID of the terminal, and the data is sent on the grant-free transmission resource determined in step 230. The ID of the terminal and the data are usually combined for coding and modulation.

Step 250: The network device first detects the pilot on the grant-free resource, then detects a channel based on the pilot, and subsequently detects the ID of the terminal and the data.

As described above, an MCS cannot be determined in real time due to uncertainty of grant-free transmission time, and therefore a fixed MCS is used. However, there is a problem: Even if there is currently a very good channel condition, the terminal cannot use a higher-order MCS, and a resource cannot be saved. On the contrary, even if there is currently a very poor channel condition, the terminal cannot use a lower-order MCS to improve reliability, causing incorrect transmission and unnecessary retransmission. Alternatively, when a QoS requirement changes, and a quantity of required time-frequency resources also changes, a resource block size cannot be adjusted. In another method, the terminal uses a real-time MCS. However, the terminal is required to additionally carry control information to indicate an MCS in this method. Consequently, a precious uplink air interface resource is wasted, and an unnecessary latency is caused because the network device needs to detect the pilot, the control information, and the data when performing grant-free transmission detection. In addition, how to ensure detection of the control information is also a problem.

Similarly, when adjusting any sending attribute parameter during grant-free transmission, the terminal faces such a dilemma.

To resolve this problem and adaptively adjust one or more sending attribute parameters during grant-free transmission without causing uplink transmission of extra control signaling, in this application, a pilot sequence is mapped to different time-frequency resource locations to indicate different sending attributes for sending grant-free data. In this method, a feature that a pilot is located at a fixed location on an RBU is changed, so that a same pilot sequence can be mapped to different time-frequency locations on an RBU based on different sending attribute parameters. In this method, although a quantity of times of blindly detecting a pilot by a network device side is increased, flexibility of grant-free transmission performed by a terminal is greatly increased, and an adaptive adjustment is made based on a channel state or QoS, thereby achieving higher grant-free transmission efficiency. Certainly, if there are sufficient pilot sequences, a more detailed sending attribute parameter adjustment may be made with reference to grouping of the pilot sequences.

Specifically, as described in FIG. 3, step 310 is the same as step 210, and step 320 is the same as step 220. Step 350 is basically the same as step 250 except that the ID is considered as a part of the data. Because the ID does not need to be sent each time, the ID is not explicitly listed. In step 330, before initiating grant-free transmission, the terminal needs to first determine a grant-free data sending attribute parameter. For example, the terminal determines sending power of the terminal based on factors such as a distance between the terminal and the network device, a channel condition, and a QoS requirement, to ensure correct reception by the network device; determines a size of a sending time-frequency resource block (namely, a granularity of an RBU); determines an MCS based on channel state information between the terminal and the network device or based on downlink channel information of the network device; and determines an RBU for transmission. A grant-free transmission resource may be a predesignated RBU or an RBU randomly selected from all grant-free transmission resources. Then, a proper sending attribute parameter group is selected from N sending attribute parameter groups based on a predetermined correspondence between a sending attribute parameter group and a pilot location, where N is a positive integer greater than 1. In addition, a to-be-used pilot sequence is determined from a pilot sequence set. The pilot sequence may be a designated pilot sequence, or may be randomly selected from the pilot sequence set. Accordingly, in step 340, based on a sending attribute parameter in the selected sending attribute parameter group, the terminal maps the pilot sequence to a designated location on the selected RBU, and maps the data to another location on the selected RBU. Herein, the ID is considered as a part of the data, and in some cases, the ID does not need to be sent each time, and therefore is not explicitly described.

Specifically, the transmission resource for grant-free transmission includes but is not limited to the following sending attribute parameters: a pilot, a coding and modulation scheme (MCS), power (Power), a codebook (Codebook), a redundancy version (RV), initial transmission/retransmission (Initial transmission/Retransmission), a hybrid automatic repeat request (Hybrid Automatic Repeat request) process number (HARQ process number), bandwidth (Bandwidth), a resource block unit (Resource Block Unit, RBU for short) size, a time-frequency resource location of an RBU, a quantity of resource block units bundled for transmission (Bundling size), a frequency hopping pattern (Hopping pattern), a frequency hopping sequence (Hopping Sequence), a spreading sequence (Spreading sequence), a scrambling sequence (Scrambler), an interleaved pattern (Interleaver), a resource mapping pattern (RE mapping pattern), a signature sequence (Signature Sequence), a transmit beam, a receive beam, and an interleaved pattern. The signature sequence may be a sparse code multiple access (Sparse Code Multiple Access, "SCMA" for short) codebook group, a low density signature (Low Density Signature, "LDS" for short) group, a CDMA code group, or the like. The transmit beam and the receive beam are mainly used for high-frequency communication. In an actual operation, a sending attribute parameter group may be created. Each sending attribute parameter group includes but is not limited to at least one of the foregoing parameters. In this way, the terminal only needs to select a group from the provided N sending attribute parameter groups based on a channel or QoS condition, and performs sending based on a sending attribute parameter stipulated in the group and a pilot location corresponding to the group. The network device may determine one of the N sending attribute parameter groups by detecting the pilot location, and detect the data based on the sending attribute parameter in the determined sending attribute parameter group.

In addition, a set of default sending attribute parameters may be further agreed upon between the network device and the terminal. In this way, each sending attribute parameter group includes only a parameter that needs to be changed. Therefore, the parameter included in each sending attribute parameter group may be different from that in another sending attribute parameter group.

It should be noted that the pilot and the data are mapped to the RBU in step 330 and step 340, regardless of pilot and data locations of another terminal. To be specific, once the terminal and the another terminal select a same RBU, a corresponding location of the pilot of the terminal and the data location of the another terminal may be orthogonal, overlapping, or partially overlapping, and a location of the data of the terminal on the RBU and the pilot location of the another terminal may be orthogonal, overlapping, or partially overlapping.

Particularly, if there are a relatively large quantity of pilot sequences, the pilot sequences may be divided into Q groups, and different groups represent different sending attribute parameter groups. In this way, there may be NQ sending attribute parameter groups in total.

The network device and the terminal need to pre-agree upon a correspondence between a grant-free data sending attribute and a pilot attribute combining a sequence and a time-frequency resource location of a pilot.

It should be noted that different time-frequency resource locations are generated in the following manners including but not limited to a frequency division manner, a time division manner, and a manner of combining frequency division and time division.

The main idea of this application is described below by using several embodiments. In all these embodiments, for example, one pilot sequence occurs in only one OFDM (Orthogonal Frequency Division Multiplex, Orthogonal Frequency Division Multiplex) symbol (symbol). However, in practice, one pilot sequence may be alternatively scattered in many symbols. Principles thereof are the same, and therefore details are not described.

### Embodiment 1

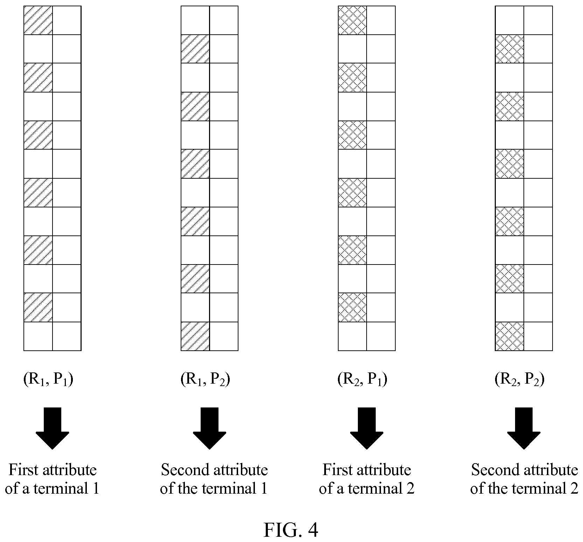

In this embodiment, an RBU is a mini-slot (mini-slot) of two consecutive OFDM symbols. A pilot sequence is placed in a first symbol in a sparse manner. In an example for description, a quantity K of pilot sequences is equal to 2 (in other words, there are two terminals), and a quantity N of time-frequency resource locations is equal to 2. A checkered pattern with slashes represents a pilot sequence R₁, and a checkered pattern with cross lines represents a pilot sequence R₂. In FIG. 4, a pilot sequence placement manner is P₁ in a first combination, and a pilot sequence placement manner is P₂ in a second combination. As shown in the figure, there may be two corresponding grant-free data sending attribute parameter groups in total. In FIG. 4, pilot sequences are placed in an alternate manner on a subcarrier, in other words, different time-frequency resource locations are generated in a frequency division manner. For example, a sending attribute parameter group includes but is not limited to at least one of the following parameters: {MCS, codebook, HARQ process, power control information, initial transmission/retransmission information, RV version, bundling size being 1, signature sequence}.

A specific sending process on a terminal side is as follows: A grant-free data sending attribute is determined, a to-be-used pilot sequence is determined from a pilot sequence set, a grant-free transmission resource in a transmission region is determined, and the pilot sequence is mapped to a designated time-frequency resource location on the grant-free transmission resource based on the determined grant-free data sending attribute.

A process of determining a grant-free data sending attribute by a network device is as follows: If the network device detects the pilot sequence R₁ at a time-frequency resource location P₁, the network device may determine that a grant-free data sending attribute of a terminal is a first attribute {MCS 1, codebook 1, HARQ process 1, power control information 1, initial transmission 1, RV version 1, bundling size 1, signature sequence 1}. If the network device detects the pilot sequence R₁ at a time-frequency resource location P₂, the network device may determine that a grant-free data sending attribute of a terminal is a second attribute {MCS 2, codebook 2, HARQ process 2, power control information 2, retransmission, RV version 2, bundling size being 2, signature sequence 2}. In particular, the second attribute may include parameters different from those in the first attribute. By analogy, the network device may determine a grant-free data sending attribute parameter group of the terminal.

In this way, different pilot locations may represent different sending attributes, and no extra signaling is required to notify the network device. Therefore, not only a sending attribute can be effectively and dynamically adjusted, but also no precious uplink air interface resource needs to be additionally consumed.

Certainly, if there are sufficient pilots, the two pilots may be corresponding to a same terminal, in other words, the terminal has four (N=2 and Q=2) different combinations of sending attribute parameters.

### Embodiment 2

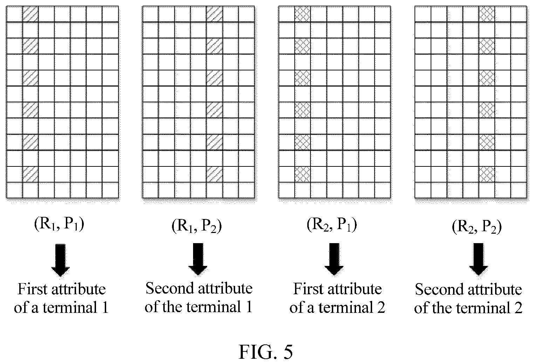

In this embodiment, an RBU is a slot (slot) occupying seven OFDM symbols. A pilot sequence is distributed in only one symbol in a sparse manner. Similarly, in an example for description, a quantity K of pilot sequences is equal to 2 (in other words, there are two terminals), and a quantity N of time-frequency resource locations is equal to 2. As shown in FIG. 5, a checkered pattern with slashes represents a pilot sequence Ri, and a checkered pattern with cross lines represents a pilot sequence R₂. In a first combination, a pilot sequence is placed in a second symbol, and a location is marked as P₁; and in a second combination, a pilot sequence is placed in a fifth symbol 1, and a location is marked as P₂. Each terminal may be corresponding to two grant-free data sending attributes in total. In FIG. 4, different time-frequency resource locations are generated in a time division manner. A network device may determine a grant-free data sending attribute parameter group of a terminal in a manner the same as that in Embodiment 1.

Being similar to Embodiment 1, if there are sufficient pilots, the two pilots may be corresponding to a same terminal, in other words, the terminal has four (N=2 and Q=2) different combinations of sending attribute parameters.

### Embodiment 3

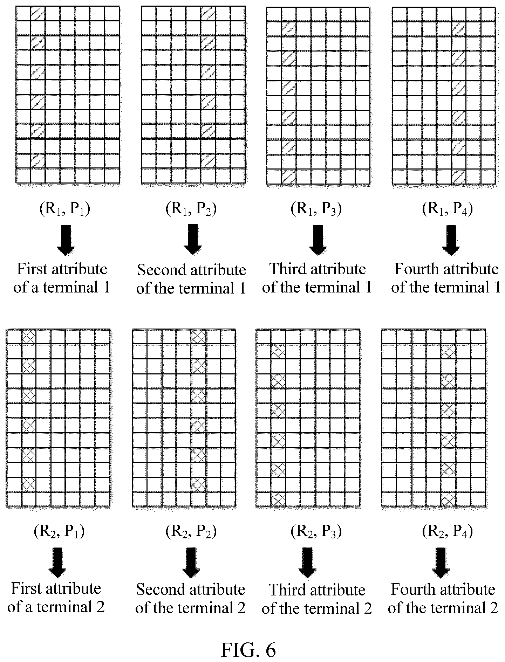

The frequency division manner for generating different time-frequency resource locations in Embodiment 1 and the time division manner for generating different time-frequency resource locations in Embodiment 2 are combined. Similarly, in an example for description, an RBU is a slot (seven symbols). A second or fifth symbol is used to send a pilot sequence, and the pilot sequence is still placed in a sparse manner. A quantity K of pilot sequences is still equal to 2 (corresponding to two terminals). A checkered pattern with slashes represents a pilot sequence Ri, and a checkered pattern with cross lines represents a pilot sequence R₂. In this case, a quantity N of time-frequency resource locations may be equal to 4. In FIG. 6, a location at which a pilot sequence is placed in the second symbol is marked as P₁ in a first combination, a location at which a pilot sequence is placed in the fifth symbol is marked as P₂ in a second combination, a location at which a pilot sequence is placed in the second symbol is marked as P₃ in a third combination, and a location at which a pilot sequence is placed in the fifth symbol is marked as P₄ in a fourth combination. Each terminal may be corresponding to fourth grant-free data sending attribute parameter groups in total. In FIG. 6, checkered patterns with slashes are corresponding to four grant-free data sending attribute parameter groups of a terminal 1, and four types of different time-frequency locations corresponding to checkered patterns with cross lines may be corresponding to four grant-free data sending attribute parameter groups of a pilot 2 (corresponding to a terminal 2). In FIG. 5, different time-frequency resource locations are generated by combining time division and frequency division. A network device may determine a grant-free data sending attribute parameter group of a terminal in a manner the same as those in Embodiment 1 and Embodiment 2.

Being similar to Embodiment 1, if there are sufficient pilots, the two pilots may be corresponding to a same terminal, in other words, the terminal has eight (N=4 and Q=2) different combinations of sending attribute parameters.

### Embodiment 4

In Embodiment 1, Embodiment 2, and Embodiment 3, RBUs have a same granularity. In fact, a time-frequency location of a pilot may be further corresponding to a granularity of an RBU.

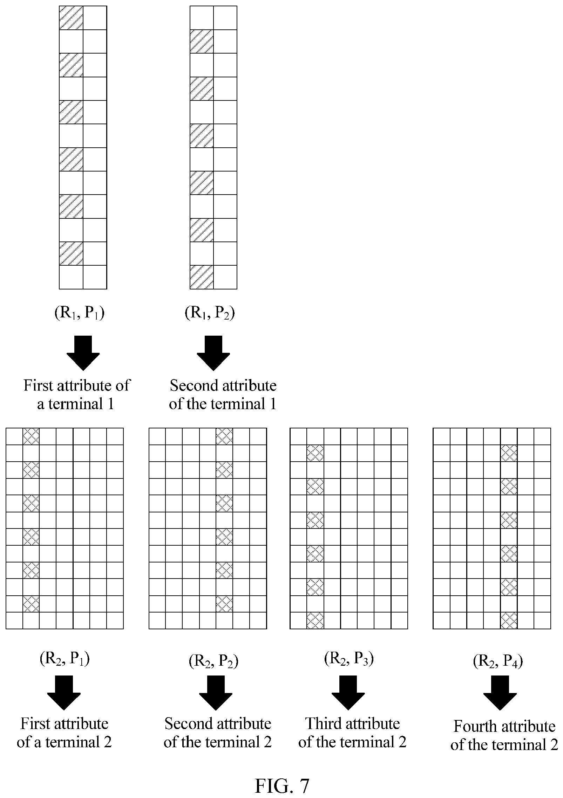

As shown in FIG. 7, when a network device detects a pilot in a second or fifth symbol of a slot, it indicates that an RBU of a terminal 2 is a slot, and when a pilot is in a first, third, or sixth symbol of a slot, it indicates that an RBU of a terminal 1 is a mini-slot. This indicates that different pilot locations represent different RBU granularities or occupy different sizes of time-frequency resources. It should be noted that herein, it is assumed that each pilot sequence appears in only one symbol, and two symbols occupied by a mini-slot include the following three possible cases: a first symbol and a second symbol, a third symbol and a fourth symbol, and a sixth symbol and a seventh symbol. The network device may determine a grant-free data sending attribute parameter group of a terminal based on a pilot location in a manner the same as those in Embodiments 1 to 3, determine a size of an RBU and another sending attribute parameter, and perform corresponding detection. There may be a plurality of possible specific implementations. However, principles thereof are the same, and therefore details are not described.

Further, in the foregoing embodiments, a location of a pilot sequence may further indicate a location of an RBU. For example, a mini-slot is not necessarily a 12 × 2 (a quantity of subcarriers × a quantity of symbols) pattern in FIG. 4, but may be a 6 × 4 pattern, or may be inconsecutive. For example, the mini-slot includes a first OFDM symbol and a third OFDM symbol of each slot. Therefore, a time-frequency resource location of the RBU is also a sending attribute parameter.

It should be understood that in various embodiments of this application, sequence numbers of steps do not necessarily indicate a sequence of operations. In addition, a combination of parameters in a sending attribute parameter group is pre-agreed upon by the network device and the terminal, may be stipulated in a protocol, may be notified by the network device during access by the terminal, or may be notified by the network device in a broadcast manner. No specific stipulation is provided herein.

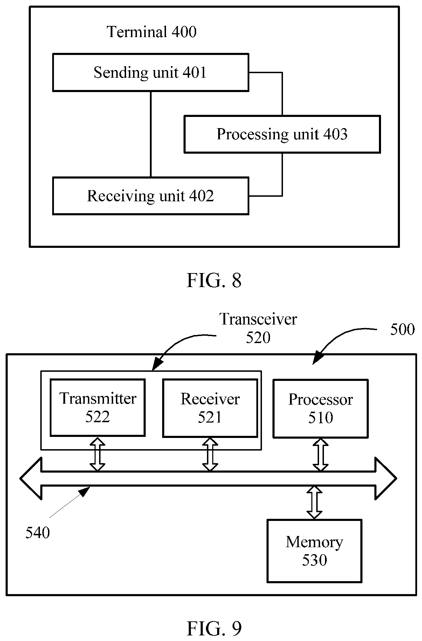

A terminal and a network device for grant-free transmission according to embodiments of this application are described below with reference to FIG. 8 to FIG. 13. Technical features described in the foregoing method embodiments may be applied to the following apparatus embodiments.

FIG. 8 shows a terminal 400 according to an embodiment of this application. As shown in FIG. 8, the terminal 400 includes:
a receiving unit 402, configured to receive grant-free transmission resource information and ID information that are sent by a network device in a broadcast or unicast manner;
a processing unit 403, configured to: select a pilot sequence, a proper sending attribute parameter group from N sending attribute parameter groups based on a channel state and a QoS requirement, and an RBU for transmission (herein, it is assumed that the pilot sequence does not imply sending attribute parameter information), map the pilot sequence to a corresponding location on the selected RBU based on a relationship between the sending attribute parameter group and a time-frequency location of a pilot, and map to-be-transmitted data to another location on the selected RBU, where N is a positive integer greater than 1; and
a sending unit 401, configured to send the pilot and the data to the network device based on a sending parameter in the selected sending attribute parameter group.

It should be noted that in this embodiment of this application, the sending unit 401 may be implemented by a transmitter, and the receiving unit 402 may be implemented by a receiver. As shown in FIG. 9, a terminal 500 may include a processor 510, a transceiver 520, and a memory 530. The transceiver 520 may include a receiver 521 and a transmitter 522. The memory 530 may be configured to store code to be executed by the processor 510, and the like. Components of the terminal 500 are coupled together by using a bus system 540. In addition to a data bus, the bus system 540 further includes a power bus, a control bus, a status signal bus, and the like.

The receiver 521 is configured to receive grant-free transmission resource information and ID information that are sent by a network device in a broadcast or unicast manner.

The processor 510 is configured to: select a pilot sequence, a proper sending attribute parameter group from N sending attribute parameter groups based on a channel state and a QoS requirement, and an RBU for transmission (herein, it is assumed that the pilot sequence does not imply sending attribute parameter information), map the pilot sequence to a corresponding location on the selected RBU based on a relationship between the sending attribute parameter group and a time-frequency location of a pilot, and map to-be-transmitted data to another location on the selected RBU, where N is a positive integer greater than 1.

The transmitter 522 is configured to send the pilot and the data to the network device based on a sending attribute parameter in the selected sending attribute parameter group.

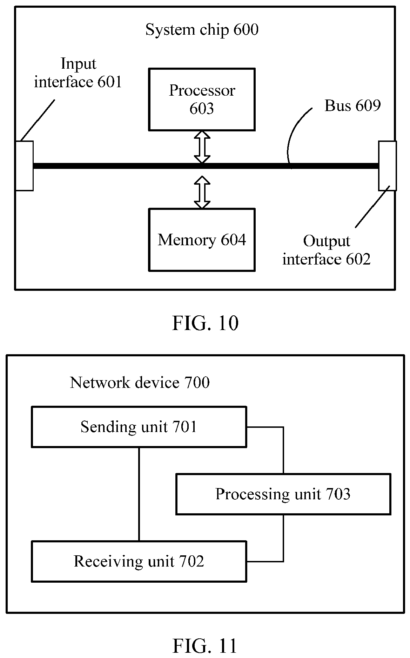

FIG. 10 is a schematic structural diagram of a system chip according to an embodiment of this application. The system chip 600 in FIG. 10 includes an input interface 601, an output interface 602, at least one processor 603, and a memory 604. The input interface 601, the output interface 602, the processor 603, and the memory 604 are connected by using a bus 605. The processor 603 is configured to execute code in the memory 604. When the code is executed, the processor 603 implements the method performed by the terminal in the foregoing embodiments.

The terminal 400 shown in FIG. 8 or the network device 500 shown in FIG. 9 or the system chip 600 shown in FIG. 10 can implement the processes implemented by the terminal in the foregoing embodiments. To avoid repetition, details are not described herein.

FIG. 11 shows a network device 700 according to an embodiment of this application. As shown in FIG. 11, the network device 700 includes:
a sending unit 701, configured to send grant-free transmission resource information to a terminal in a unicast or broadcast manner;
a receiving unit 702, configured to receive grant-free transmission data and a pilot that are sent by the terminal on a grant-free transmission resource; and
a processing unit 703, configured to: perform blind detection on N time-frequency resource locations at which the pilot may be located, where N is a positive integer greater than 1, and if the pilot is detected, determine a sending attribute parameter group of the terminal based on a location of the pilot, and determine a sending attribute parameter such as a size of an RBU, an MCS, power, an RV version, or a HARQ process based on a parameter in the sending attribute parameter group.

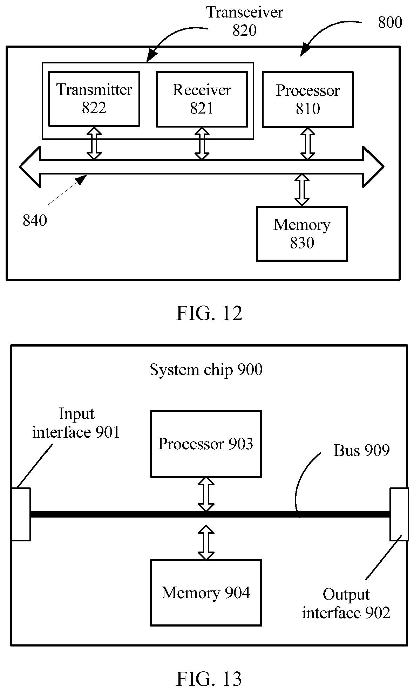

It should be noted that in this embodiment of this application, the sending unit 701 may be implemented by a transmitter, and the receiving unit 702 may be implemented by a receiver. As shown in FIG. 12, a network device 800 may include a processor 810, a transceiver 820, and a memory 830. The transceiver 820 may include a receiver 821 and a transmitter 822. The memory 830 may be configured to store code to be executed by the processor 810, and the like. Components of the network device 800 are coupled together by using a bus system 840. In addition to a data bus, the bus system 840 further includes a power bus, a control bus, a status signal bus, and the like.

The transmitter 822 is configured to send grant-free transmission resource information to a terminal in a unicast or broadcast manner.

The receiver 821 is configured to receive grant-free transmission data and a pilot that are sent by the terminal on a grant-free transmission resource.

The processor 810 is configured to: perform blind detection on N time-frequency resource locations at which the pilot may be located, where N is a positive integer greater than 1, and if the pilot is detected, determine a sending attribute parameter group of the terminal based on a location of the pilot, and determine a sending attribute parameter such as a size of an RBU, an MCS, power, an RV version, or a HARQ process based on a parameter in the sending attribute parameter group.

FIG. 13 is a schematic structural diagram of a system chip according to an embodiment of this application. The system chip 900 in FIG. 13 includes an input interface 901, an output interface 902, at least one processor 903, and a memory 904. The input interface 901, the output interface 902, the processor 903, and the memory 904 are connected by using a bus 905. The processor 903 is configured to execute code in the memory 904. When the code is executed, the processor 903 implements the method performed by the terminal in the foregoing embodiments.

The terminal 700 shown in FIG. 11 or the network device 800 shown in FIG. 12 or the system chip 900 shown in FIG. 13 can implement the processes implemented by the network device in the foregoing embodiments. To avoid repetition, details are not described herein.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes in the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A grant-free transmission method, wherein the method comprises:
obtaining, by a terminal, a pilot sequence and a grant-free transmission resource block unit, selecting a sending attribute parameter group from N sending attribute parameter groups, mapping the pilot sequence to a corresponding location on the resource block unit based on a relationship between the selected sending attribute parameter group and a time-frequency location of a pilot, and mapping to-be-transmitted data to another location on the resource block unit, wherein N is a positive integer greater than 1.

2. The method according to claim 1, wherein the selected sending attribute parameter group comprises at least one of the following parameters: a coding and modulation scheme MCS, power, a codebook, a redundancy version, initial transmission/retransmission, a hybrid automatic repeat request HARQ process number, bandwidth, a resource block unit size, a resource block unit location, a quantity of resource block units bundled for transmission, a frequency hopping pattern, a frequency hopping sequence, a spreading sequence, a scrambling sequence, an interleaved pattern, a resource mapping pattern, a signature sequence, a transmit beam, and a receive beam.

3. The method according to the claim 1, wherein the mapping the pilot sequence to a corresponding location on the grant-free transmission resource block unit based on a relationship between the sending attribute parameter and a time-frequency location of a pilot specifically comprises: the corresponding location and a data location of another terminal are orthogonal, overlapping, or partially overlapping.

4. The method according to claim 1, wherein the mapping to-be-transmitted data to another location on the grant-free transmission resource block unit specifically comprises: the another location on the resource block unit and a pilot location of another terminal are orthogonal, overlapping, or partially overlapping.

5. The method according to any one of claims 1 to 4, wherein the pilot sequence is a designated sequence or is randomly selected from a pilot sequence set.

6. The method according to any one of claims 1 to 5, wherein the grant-free transmission resource block unit is designated or randomly selected in a grant-free transmission resource region.

7. The method according to any one of claims 1 to 6, wherein at least one of the N sending parameter groups comprises a parameter different from that in another sending parameter group.

8. A grant-free transmission method, wherein the method comprises:
receiving, by a network device, a pilot and data that are sent by a terminal on a grant-free transmission resource block unit, performing detection at a time-frequency location at which the pilot may be located, obtaining a sending attribute parameter based on a location of the pilot and a relationship between the sending attribute parameter and the time-frequency location of the pilot after detecting the pilot, and detecting the data based on the pilot and the sending attribute parameter.

9. The method according to claim 8, wherein the sending attribute parameter comprises at least one of the following parameters: a coding and modulation scheme MCS, power, a codebook, a redundancy version, initial transmission/retransmission, a hybrid automatic repeat request HARQ process number, bandwidth, a resource block unit size, a resource block unit location, a quantity of resource block units bundled for transmission, a frequency hopping pattern, a frequency hopping sequence, a spreading sequence, a scrambling sequence, an interleaved pattern, a resource mapping pattern, a signature sequence, a transmit beam, and a receive beam.

10. The method according to claim 8 or 9, wherein at least one of the N sending parameter groups comprises a parameter different from that in another sending parameter group.

11. A terminal, wherein the terminal comprises:
a processor, configured to: select a pilot sequence, a sending attribute parameter group from N sending attribute parameter groups, and a grant-free transmission resource block unit, map the pilot sequence to a corresponding location on the resource block unit based on a relationship between the sending attribute parameter group and a time-frequency location of a pilot, and map to-be-transmitted data to another location on the resource block unit, wherein N is a positive integer greater than 1;
a transmitter, configured to send the pilot and the data to a network device based on a sending attribute parameter in the selected sending attribute parameter group; and
a memory, configured to store code to be executed by the processor.

12. The terminal according to claim 11, wherein the sending attribute parameter comprises at least one of the following parameters: a coding and modulation scheme MCS, power, a codebook, a redundancy version, initial transmission/retransmission, a HARQ process number, bandwidth, a resource block unit size, a resource block unit location, a quantity of resource block units bundled for transmission, a frequency hopping pattern, a frequency hopping sequence, a spreading sequence, a scrambling sequence, an interleaved pattern, a resource mapping pattern, a signature sequence, a transmit beam, and a receive beam.

13. The terminal according to the claim 11, wherein the mapping the pilot sequence to a corresponding location on the resource block unit based on a relationship between the sending attribute parameter group and a time-frequency location of a pilot specifically comprises: the corresponding location and a data location of another terminal are orthogonal, overlapping, or partially overlapping.

14. The terminal according to claim 11, wherein the mapping to-be-transmitted data to another location on the resource block unit specifically comprises: the another location on the resource block unit and a pilot location of another terminal are orthogonal, overlapping, or partially overlapping.

15. The terminal according to any one of claims 11 to 14, wherein the pilot sequence is a designated sequence or is randomly selected from a pilot sequence set.

16. The terminal according to any one of claims 11 to 15, wherein the resource block unit is designated or randomly selected in a grant-free transmission resource region.

17. The terminal according to any one of claims 11 to 16, wherein at least one of the N sending parameter groups comprises a parameter different from that in another sending parameter group.

18. A network device, wherein the network device comprises:
a receiver, configured to receive grant-free transmission data and a pilot that are sent by a terminal on a grant-free transmission resource;
a processor, configured to: perform blind detection on N time-frequency resource locations at which the pilot may be located, wherein N is a positive integer greater than 1, and if the pilot is detected, determine a sending attribute parameter of the terminal based on a time-frequency resource location of the pilot; and
a memory, configured to store code to be executed by the processor.

19. The network device according to claim 18, wherein the sending attribute parameter comprises at least one of the following parameters: a coding and modulation scheme MCS, power, a codebook, a redundancy version, initial transmission/retransmission, a HARQ process number, bandwidth (Bandwidth), a resource block unit size, a resource block unit location, a quantity of resource block units bundled for transmission, a frequency hopping pattern, a frequency hopping sequence, a spreading sequence, a scrambling sequence, an interleaved pattern, a resource mapping pattern, a signature sequence, a transmit beam, and a receive beam.

20. The method according to claim 18 or 19, wherein at least one of the N sending parameter groups comprises a parameter different from that in another sending parameter group.

21. A chip, comprising:
an input interface, configured to obtain grant-free transmission resource information;
a processor, configured to perform the method according to any one of claims 1 to 7, to determine a to-be-sent pilot and to-be-sent data; and
an output interface, configured to output the to-be-sent pilot and the to-be-sent data.

22. A chip, comprising:
an input interface, configured to obtain grant-free transmission data and a pilot that are sent by a terminal on a grant-free transmission resource;
a processor, configured to perform the method according to any one of claims 8 to 10; and
an output interface, configured to output grant-free transmission resource information.

23. A computer readable storage medium, wherein the computer readable storage medium stores a program, and the program enables a terminal device to perform the method according to any one of claims 1 to 7.

24. A computer readable storage medium, wherein the computer readable storage medium stores a program, and the program enables a network device to perform the method according to any one of claims 8 to 10.
